# EUROPÄISCHE PATENTANMELDUNG

(11) **EP 4 417 340 A1**
(43) Veröffentlichungstag der Anmeldung: **21.08.2024**
(21) Anmeldenummer: 24155018.5
(22) Anmeldetag: 31.01.2024
(51) Int. Cl.: B22C 9/06, B22D 17/22, B22D 19/00, B22F 5/10, B22F 7/06, B22F 7/08, B22F 10/28

(54) **VERFAHREN ZUR HERSTELLUNG EINES EINSATZES FÜR EIN GIESSWERKZEUG SOWIE EINSATZ FÜR EIN GIESSWERKZEUG**

(30) Priorität: 16.02.2023 DE 102023103896
(71) Anmelder: Grohe AG, 58675 Hemer (DE)
(72) Erfinder: Romanowski, Carsten, 58638 Iserlohn (DE)

(57) **Zusammenfassung**

Verfahren zur Herstellung eines Einsatzes (1) für ein Gießwerkzeug, aufweisend zumindest die folgenden Schritte:
a) 3D-Drucken zumindest eines Kühlkanals (2) aus einem ersten Material (7);
b) 3D-Drucken einer Schale (3) aus einem zweiten Material (8) für den zumindest einen Kühlkanal (2); und
c) zumindest teilweises Füllen der Schale (3) mit einem dritten Material, sodass der zumindest eine Kühlkanal (2) in der Schale (3) zumindest teilweise mit dem dritten Material (9) umgossen wird.

Zudem wird ein Einsatz (1) für ein Gießwerkzeug vorgeschlagen.

## Beschreibung

Die vorliegende Erfindung betrifft ein Verfahren zur Herstellung eines Einsatzes für ein Gießwerkzeug sowie einen Einsatz für ein Gießwerkzeug. Gießwerkzeuge dienen insbesondere als Form zur Herstellung von Werkstücken.

Beim Spritzgießen wird regelmäßig ein Kunststoff oder Metall zu einer Schmelze verflüssigt und zur Ausbildung des Werkstücks mittels einer Spritzgießmaschine in eine Kavität eines Gießwerkzeugs gespritzt. Zum Kühlen der Schmelze in dem Gießwerkzeug kann das Gießwerkzeug Kühlkanäle aufweisen, durch die beim Spritzgießen eine Kühlflüssigkeit strömen kann. Um eine optimale Kühlung zu gewährleisten, müssen die Kühlkanäle häufig mit einem komplexen Verlauf ausgebildet werden. Hierzu können das Gießwerkzeug bzw. ein Einsatz des Spritzgießwerkzeugs mittels eines 3D-Druckers gedruckt werden.

Ein Einsatz mit Kühlkanälen kann aus einem 3D-gedruckten Block aus einem Metall, wie zum Beispiel Messing, bestehen. Eine Oberfläche eines solchen Einsatzes kann beim Spritzgießen einem hohen Verschleiß unterliegen, insbesondere bei einer Verwendung von abrasiven Formmaterialien, wie zum Beispiel gefüllten und/oder verstärkten Kunststoffen.

Aufgabe der Erfindung ist es daher, die mit Bezug auf den Stand der Technik geschilderten Probleme zumindest teilweise zu lösen und insbesondere ein Verfahren anzugeben, mit dem ein Einsatz für ein Gießwerkzeug herstellbar ist, dessen Oberfläche eine hohe Verschleißfestigkeit aufweist. Zudem soll ein Einsatz für ein Gießwerkzeug angegeben werden, dessen Oberfläche eine hohe Verschleißfestigkeit aufweist.

Diese Aufgaben werden gelöst mit einem Verfahren und einem Einsatz gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Herstellung eines Einsatzes für ein Gießwerkzeug bei, das zumindest die folgenden Schritte aufweist:
a) 3D-Drucken zumindest eines Kühlkanals aus einem ersten Material;
b) 3D-Drucken einer Schale aus einem zweiten Material für den zumindest einen Kühlkanal; und
c) zumindest teilweises Füllen der Schale mit einem dritten Material, sodass der zumindest eine Kühlkanal in der Schale zumindest teilweise mit dem dritten Material umgossen wird.

Das Gießwerkzeug, beispielsweise nach Art eines Spritzgießwerkzeugs, kann zumindest einen Werkzeughohlraum aufweisen, der zum Beispiel als Matrize oder Kavität ausgebildet sein kann. Der Werkzeughohlraum bildet insbesondere ein Negativ einer Außenform eines herzustellenden Werkstücks. Hierzu kann das Gießwerkzeug insbesondere mehrteilig ausgebildet sein. Beispielsweise kann das Gießwerkzeug eine erste Werkzeughälfte und eine zweite Werkzeughälfte umfassen, die zur Entnahme des hergestellten Werkstücks voneinander trennbar sind. Der Einsatz ist in dem Werkzeughohlraum anordenbar, um beispielsweise einen Hohlraum in dem Werkstück herzustellen. Bei dem Einsatz kann es sich um einen Gießkern bzw. Kühlkern handeln.

Das Gießwerkzeug kann Teil einer Spritzgießmaschine sein, mittels der eine Schmelze in das Gießwerkzeug bzw. in den Werkzeughohlraum des Gießwerkzeugs spritzbar ist. Bei der Schmelze kann es sich um einen Kunststoff, wie zum Beispiel einen Thermoplast, oder ein Metall, wie zum Beispiel Zink, handeln.

In einem Schritt a) wird zumindest ein Kühlkanal aus einem ersten Material durch 3D-Druck bzw. mithilfe eines 3D-Druckers hergestellt. Beim 3D-Druck handelt es sich um ein Verfahren zur additiven Fertigung. Der 3D-Druck des zumindest einen Kühlkanals erfolgt insbesondere durch einen schichtweisen Aufbau des zumindest einen Kühlkanals. Der schichtweise Aufbau erfolgt insbesondere computergesteuert und/oder aus einem oder mehreren flüssigen oder festen Werkstoffen. Weiterhin können beim schichtweisen Aufbau physikalische oder chemische Härtungs- oder Schmelzprozesse stattfinden. Bei dem ersten Material kann es sich insbesondere um ein Material mit einer hohen Wärmeleitfähigkeit handeln. Das erste Material kann beispielsweise als Metallpulver bereitgestellt werden.

Die Bereitstellung erfolgt insbesondere in einem Arbeitsraum und/oder auf einer Arbeitsfläche des 3D-Druckers. Das schichtweise Aufbauen des Werkstücks kann durch partielles Schmelzen des Metallpulvers erfolgen. Das partielle Schmelzen kann beispielsweise durch selektives Laserschmelzen oder selektives Elektronenstrahlschmelzen erfolgen. Die Verwendung eines Lasers bzw. mindestens eines Laserstrahls erlaubt beim Laserstrahlschmelzen in vorteilhafter Weise, dass das Metallpulver in hoher Geschwindigkeit schmelzbar, mit einer hohen Temperatur schmelzbar und/oder sehr präzise schmelzbar ist. Beim schichtweisen Aufbauen des zumindest einen Kühlkanals können insbesondere mehrere Schichten nacheinander, übereinander bzw. Schicht für Schicht gebildet werden. Dabei beschreibt eine Schicht im Wesentlichen einen horizontalen Querschnitt durch den zumindest einen Kühlkanal. Bei dem partiellen Schmelzen kann das sich innerhalb einer Schicht befindliche Metallpulver lokal, an vorbestimmten Punkten, an denen eine Materialverfestigung eintreten soll, solange und/oder so intensiv erwärmt werden, dass sich Pulverkörner des Metallpulver dort (kurzzeitig) verflüssigen und so dauerhaft (bzw. bis zu einem erneuten Erwärmen) miteinander verbinden. Beim 3D-Drucken des zumindest einen Kühlkanals können unterschiedliche 3D-Druckverfahren zur Anwendung kommen, wie zum Beispiel Lasersintern, Laserstrahlschmelzen oder Elektronenstrahlschmelzen.

Der zumindest eine Kühlkanal wird in Schritt a) insbesondere rohrförmig ausgebildet bzw. liegt nach Schritt a) als Rohr vor. Weiterhin kann der zumindest eine Kühlkanal (insbesondere entlang seiner Längsachse) beispielsweise eine Länge von 10 mm [Millimeter] bis 1.000 mm aufweisen. Zudem kann der zumindest eine Kühlkanal (insbesondere orthogonal zu seiner Längsachse) zumindest teilweise einen runden, ovalen, rechteckigen und/oder quadratischen Querschnitt aufweisen. Beispielsweise kann der zumindest eine Kühlkanal (insbesondere orthogonal zu seiner Längsachse) einen Durchmesser von 1 mm bis 50 mm aufweisen. Der zumindest eine Kühlkanal weist insbesondere zumindest einen Einlass und zumindest einen Auslass für ein Kühlfluid auf. Bei dem Kühlfluid kann es sich insbesondere um ein Kühlgas, wie zum Beispiel Luft oder Stickstoff, oder eine Kühlflüssigkeit, wie zum Beispiel Wasser, handeln. Durch das 3D-Drucken kann der zumindest eine Kühlkanal mit einer beliebigen Struktur und/oder einem beliebigen Verlauf ausgebildet werden. Dies ermöglicht insbesondere den zumindest einen Kühlkanal in Bereichen des Einsatzes auszubilden, in denen bei der Verwendung des Einsatzes eine möglichst starke Kühlung und damit eine schnelle Erstarrung der Schmelze in dem Werkzeughohlraum gewünscht wird. Die verbesserte Kühlung erlaubt wiederum geringere Zykluszeiten bzw. höhere Produktionsgeschwindigkeiten beim Gießen bzw. Spritzgießen. Der zumindest eine Kühlkanal kann zumindest teilweise mit einem nicht-linearen Verlauf ausgebildet werden. Dies kann insbesondere bedeuten, dass der zumindest eine Kühlkanal zumindest eine Biegung aufweisen kann. Die zumindest eine Biegung kann beispielsweise einen Radius von 1 mm bis 10 mm aufweisen. Weiterhin können in Schritt a) eine Mehrzahl von Kühlkanäle, beispielsweise 2 bis 20 Kühlkanäle, hergestellt werden. Die Kühlkanäle können dabei zumindest teilweise gleichzeitig hergestellt werden. Weiterhin kann der zumindest eine Kühlkanal mit zumindest einer Stützstruktur und/oder Befestigungsstruktur ausgebildet werden. Zudem kann zumindest eine Stützstruktur und/oder Befestigungsstruktur zwischen einzelnen Kühlkanälen ausgebildet werden. Die zumindest eine Stützstruktur und/oder Befestigungsstruktur kann insbesondere nach Art einer (insbesondere dünnen) Strebe ausgebildet sein.

Nach Schritt a) kann der zumindest eine Kühlkanal entpulvert werden. Unter "Entpulvern" ist insbesondere ein Entfernen von Resten des Metallpulvers aus dem zumindest einen Kühlkanal zu verstehen. Das Metallpulver kann beispielsweise über den zumindest einen Einlass und/oder zumindest einen Auslass des zumindest einen Kühlkanals aus dem zumindest einen Kühlkanal entfernt werden. In den zumindest einen Kühlkanal kann zumindest ein Loch zum Entpulvern des zumindest einen Kühlkanals eingebracht werden. Das Einbringen des zumindest einen Lochs erfolgt insbesondere nach Schritt a) und vor Schritt c). Das zumindest eine Loch kann beispielsweise durch Bohren erzeugt werden. Insbesondere kann das zumindest eine Loch im Bereich einer Biegung des zumindest einen Kühlkanals in den zumindest einen Kühlkanal eingebracht werden. Hierdurch kann insbesondere das Entfernen des Metallpulvers aus den Biegungen erleichtert werden, insbesondere wenn die Biegung einen geringen Radius aufweist. Das Loch kann einen Lochdurchmesser von beispielsweise 1 mm bis 5 mm aufweisen. Das zumindest eine Loch wird insbesondere in einer Rohrwand des zumindest einen Kühlkanals ausgebildet. Das zumindest eine Loch kann nach dem Entpulvern geschlossen werden. Das Schließen des zumindest einen Lochs kann beispielsweise durch Schweißen erfolgen. Das Entpulvern kann mithilfe von mechanischen Stößen oder Ultraschall erfolgen.

In einem Schritt b) wird eine Schale des Einsatzes aus einem zweiten Material durch 3D-Druck bzw. mithilfe des 3D-Druckers hergestellt. Die Schale kann zumindest teilweise eine äußere Form des Einsatzes und/oder zumindest teilweise eine Außenfläche des Einsatzes bilden. Die Schale kann derart gedruckt werden, dass diese nach dem 3D-Drucken (im Wesentlichen) die äußere Form des Einsatzes bzw. die Außenfläche des Einsatzes aufweist. Bei der Schale kann es sich um ein Gefäß bzw. einen Hohlkörper mit einer Öffnung handeln. Die Schale kann einen Aufnahmeraum für den zumindest einen Kühlkanal aufweisen. Die Schale kann beispielsweise eine Länge von 50 mm bis 1.000 mm, eine Breite von 50 mm bis 1.000 mm und/oder eine Höhe von 50 mm bis 1.000 mm aufweisen. Die Öffnung kann beispielsweise einen Durchmesser von 48 mm bis 998 mm aufweisen. Die Öffnung kann in einem Deckel der Schale ausgebildet sein. Bei dem zweiten Material handelt es sich insbesondere um ein Material bzw. ein zweites Metall mit einer besonders hohen Verschleißfestigkeit. Das zweite Metall kann ebenfalls als Metallpulver bereitgestellt werden.

Das 3D-Drucken des zumindest einen Kühlkanals in Schritt a) kann unabhängig von dem 3D-Drucken der Schale in Schritt b) erfolgen. Dies kann beispielsweise bedeuten, dass der zumindest eine Kühlkanal und die Schale nicht gemeinsam gedruckt und/oder dass der zumindest eine Kühlkanal und die Schale als separate Komponenten hergestellt werden. Beispielsweise kann Schritt a) vor Schritt b) oder umgekehrt durchgeführt werden. Der zumindest eine Kühlkanal kann nach den Schritten a) und b) zumindest teilweise in der Schale bzw. in dem Aufnahmeraum der Schale angeordnet werden. Der zumindest eine Kühlkanal kann derart in der Schale bzw. in dem Aufnahmeraum der Schale angeordnet werden, dass sich der zumindest eine Einlass und/oder der zumindest eine Auslass des zumindest einen Kühlkanals außerhalb der Schale bzw. des Aufnahmeraums der Schale befindet.

In einem Schritt c) wird die Schale zumindest teilweise mit einem dritten Material gefüllt, sodass der zumindest eine Kühlkanal in der Schale bzw. dem Aufnahmeraum der Schale zumindest teilweise mit dem dritten Material umgossen wird. Das dritte Material kann als flüssige Schmelze durch die Öffnung der Schale in den Aufnahmeraum der Schale gegossen werden, sodass das dritte Material den zumindest einen Kühlkanal mit der Schale verbindet, sodass der Aufnahmeraum, insbesondere vollständig, durch das dritte Material gefüllt wird und/oder sodass ein massiver Körper entsteht. Das dritte Material kann Freiräume zwischen den Kühlkanälen füllen. Bei dem dritten Material handelt es sich insbesondere um ein Material bzw. drittes Metall mit einer besonders hohen thermischen Leitfähigkeit. Das dritte Material kühlt in der Schale bzw. dem Aufnahmeraum der Schale ab, sodass das dritte Material erstarrt. Das dritte Material befestigt den zumindest einen Kühlkanal in der Schale. Die Schale ist über das dritte Material wärmeleitend mit dem zumindest einen Kühlkanal verbunden.

In Schritt c) kann der zumindest eine Kühlkanal mit einem Kühlfluid durchströmt werden. Hierdurch kann der zumindest eine Kühlkanal gekühlt werden, während der zumindest eine Kühlkanal in Schritt c) mit dem dritten Material umgossen wird. Bei dem Kühlfluid kann es sich insbesondere um das Kühlgas, wie zum Beispiel Luft oder Stickstoff, oder die Kühlflüssigkeit, wie zum Beispiel Wasser, handeln.

In Schritt c) kann ein Block gegossen werden. Der Block kann beispielsweise zumindest teilweise in Form eines Quaders und/oder Zylinders ausgebildet werden. Bei dem Block kann es sich insbesondere um einen massiven Körper handeln, durch den der zumindest eine Kühlkanal zumindest teilweise verläuft.

In Schritt a) kann der zumindest eine Kühlkanal zumindest teilweise mit einer Kanalwandstärke von 0,5 mm bis 5 mm gedruckt werden. Bevorzugt kann in Schritt a) der zumindest eine Kühlkanal zumindest teilweise oder vollständig, d. h. insbesondere über seine gesamte Länge, mit einer Wandstärke von 1 mm bis 2 mm gedruckt werden. Bei der Wandstärke handelt es sich insbesondere um eine Dicke einer Rohrwand des zumindest einen Kühlkanals. Die Wandstärke des zumindest einen Kühlkanals bemisst sich insbesondere orthogonal zu einer Längsachse des Kühlkanals.

Bei dem ersten Material kann es sich um Kupfer, eine Kupferlegierung, Messing oder Stahl handeln. Der zumindest eine Kühlkanal wird insbesondere aus einem ersten Metall, wie zum Beispiel Kupfer (insbesondere mit einem Schmelzpunkt von über 1.040 °C [Celsius]), einer Kupferlegierung, Messing oder Stahl, gedruckt.

In Schritt b) kann die Schale zumindest teilweise mit einer Wandstärke von 2 mm bis 10 mm gedruckt werden.

In Schritt b) kann an der Schale zumindest eine Befestigungsstruktur für das dritte Material erzeugt werden. Die zumindest eine Befestigungsstruktur kann insbesondere an einer Innenfläche der Schale bzw. in dem Aufnahmeraum der Schale ausgebildet werden. Die zumindest eine Befestigungsstruktur kann in Schritt c) zumindest teilweise mit dem dritten Material umgossen werden. Durch die zumindest eine Befestigungsstruktur ist ein Lösen des dritten Materials und/oder des zumindest einen Kühlkanals aus der Schale bzw. aus dem Aufnahmeraum der Schale verhinderbar. Die zumindest eine Befestigungsstruktur kann nach Art einer Rippe, eines Stegs, eines Stachels und/oder einer Spitze ausgebildet sein.

Der zumindest eine Kühlkanal und die Schale können gemeinsam gedruckt werden. Dies kann insbesondere bedeuten, dass die Schritte a) und b) gleichzeitig und/oder durch den gleichen 3D-Drucker durchgeführt werden. Der zumindest eine Kühlkanal und die Schale können aus dem gleichen Material erzeugt werden. Der zumindest eine Kühlkanal wird zumindest teilweise innerhalb der Schale bzw. des Aufnahmeraums der Schale ausgebildet. Der zumindest eine Kühlkanal und die Schale können mithilfe zumindest einer Stützstruktur und/oder Verbindungsstruktur miteinander verbunden werden. Durch die zumindest eine Stützstruktur und/oder Verbindungstruktur ist eine Lage bzw. Position des zumindest einen Kühlkanals in der Schale bzw. dem Aufnahmeraum der Schale sicherbar.

Bei dem zweiten Material kann es sich um Stahl handeln. Insbesondere kann es sich bei dem zweiten Material um einen, insbesondere härtbaren, Edelstahl, Werkzeugstahl oder Maraging-Stahl handeln.

Bei dem dritten Material kann es sich um Kupfer, eine Kupferlegierung oder Messing handeln. Das Kupfer kann insbesondere einen Schmelzpunkt von über 1.040 °C aufweisen.

In einem Schritt d) kann eine mechanische Bearbeitung der Schale erfolgen. Insbesondere kann in Schritt d) eine mechanische Bearbeitung der Innenfläche der Schale und/oder einer Außenfläche der Schale erfolgen. Die mechanische Bearbeitung kann beispielsweise mittels eines spanenden Fertigungsverfahrens erfolgen. Beispielsweise kann die mechanische Bearbeitung Fräsen, Drehen, Bohren, Erodieren und/oder Polieren umfassen. Durch die mechanische Bearbeitung ist insbesondere eine gewünschte Kontur der Schale bzw. des Einsatzes und/oder eine gewünschte Oberflächenrauhigkeit der Schale bzw. des Einsatzes erzeugbar.

Einem weiteren Aspekt folgend wird ein Einsatz für ein Gießwerkzeug vorgeschlagen, der zumindest Folgendes aufweist:
- zumindest einen 3D-gedruckten Kühlkanal aus einem ersten Material; und
- eine 3D-gedruckte Schale aus einem zweiten Material, wobei die Schale zumindest teilweise mit einem dritten Material gefüllt ist, sodass der zumindest eine Kühlkanal in der Schale zumindest teilweise mit dem dritten Material umgossen ist.

Für weitere Einzelheiten zu dem Einsatz wird vollumfänglich auf die Beschreibung des Verfahrens verwiesen.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein Einsatz für ein Gießwerkzeug in einem Querschnitt; und
- Fig. 2:: ein Verfahren zur Herstellung des Einsatzes in einem Ablaufdiagramm.

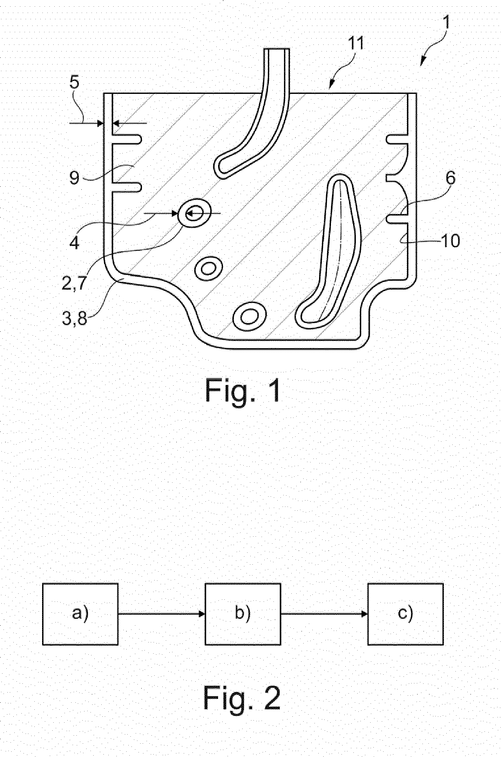

Die Fig. 1 zeigt einen Einsatz 1 für ein Gießwerkzeug in einem Querschnitt. Der Einsatz 1 umfasst eine 3D-gedruckte Schale 3 mit einer Wandstärke 5. Innerhalb der Schale 3 ist ein 3D-gedruckter Kühlkanal 2 mit einer Kanalwandstärke 4 angeordnet. Der Kühlkanal 2 wurde aus einem ersten Material 7 und die Schale 3 aus einem zweiten Material 8 gedruckt. Die Schale 3 ist mit einem dritten Material 9 gefüllt, sodass der Kühlkanal 2 in der Schale 3 mit dem dritten Material 9 umgossen ist. Die Schale 3 weist auf ihrer Innenfläche 10 Befestigungsstrukturen 6 für das dritte Material 9 auf, sodass sich das dritte Material 9 mit dem Kühlkanal 2 nicht aus einer Öffnung 11 der Schale 3 lösen kann.

Die Fig. 2 zeigt ein Verfahren zur Herstellung des in der Fig. 1 gezeigten Einsatzes 1 in einem Ablaufdiagramm. In einem Schritt a) wurde der Kühlkanal 2 aus dem ersten Material 7 und in einem Schritt b) die Schale 3 aus einem zweiten Material 8 3D-gedruckt. Anschließend wurde in einem Schritt c) die Schale 3 mit dem dritten Material 9 gefüllt, sodass der Kühlkanal 2 in der Schale 3 mit dem dritten Material 9 umgossen wird.

Durch die vorliegende Erfindung ist ein Einsatz 1 für ein Gießwerkzeug herstellbar, dessen Oberfläche eine hohe Verschleißfestigkeit aufweist.

### Bezugszeichenliste

- 1: Einsatz
- 2: Kühlkanal
- 3: Schale
- 4: Kanalwandstärke
- 5: Wandstärke
- 6: Befestigungsstruktur
- 7: erstes Material
- 8: zweites Material
- 9: drittes Material
- 10: Innenfläche
- 11: Öffnung

## Patentansprüche

1. Verfahren zur Herstellung eines Einsatzes (1) für ein Gießwerkzeug, aufweisend zumindest die folgenden Schritte:
a) 3D-Drucken zumindest eines Kühlkanals (2) aus einem ersten Material (7);
b) 3D-Drucken einer Schale (3) aus einem zweiten Material (8) für den zumindest einen Kühlkanal (2); und
c) zumindest teilweises Füllen der Schale (3) mit einem dritten Material (9), sodass der zumindest eine Kühlkanal (2) in der Schale (3) zumindest teilweise mit dem dritten Material (9) umgossen wird.

2. Verfahren nach Patentanspruch 2, wobei in Schritt a) der zumindest eine Kühlkanal (2) zumindest teilweise mit einer Kanalwandstärke (4) von 0,5 mm bis 5 mm gedruckt wird.

3. Verfahren nach einem der vorhergehenden Patentansprüche, wobei es sich bei dem ersten Material (7) um Kupfer, eine Kupferlegierung, Messing oder Stahl handelt.

4. Verfahren nach einem der vorhergehenden Patentansprüche, wobei in Schritt b) die Schale (3) zumindest teilweise mit einer Wandstärke (5) von 2 mm bis 10 mm gedruckt wird.

5. Verfahren nach einem der vorhergehenden Patentansprüche, wobei in Schritt b) an der Schale (3) zumindest eine Befestigungsstruktur (6) für das dritte Material (9) erzeugt wird.

6. Verfahren nach einem der vorhergehenden Patentansprüche, wobei der zumindest eine Kühlkanal (2) und die Schale (3) gemeinsam gedruckt werden.

7. Verfahren nach einem der vorhergehenden Patentansprüche, wobei es sich bei dem zweiten Material (8) um Stahl handelt.

8. Verfahren nach einem der vorhergehenden Patentansprüche, wobei es sich bei dem dritten Material (9) um Kupfer, eine Kupferlegierung oder Messing handelt.

9. Verfahren nach einem der vorhergehenden Patentansprüche, wobei in einem Schritt d) eine mechanische Bearbeitung der Schale (3) erfolgt.

10. Einsatz (1) für ein Gießwerkzeug, aufweisend zumindest:
- zumindest einen 3D-gedruckten Kühlkanal (2) aus einem ersten Material (7); und
- eine 3D-gedruckte Schale (3) aus einem zweiten Material (8), wobei die Schale (3) zumindest teilweise mit einem dritten Material (9) gefüllt ist, sodass der zumindest eine Kühlkanal (2) in der Schale (3) zumindest teilweise mit dem dritten Material (9) umgossen ist.
